## Europäisches Patentamt

## European Patent Office

## Office européen des brevets

(11) Veröffentlichungsnummer: **0 014 857**
**B1**

(12) **EUROPÄISCHE PATENTSCHRIFT**

(45) Veröffentlichungstag der Patentschrift:
**02.05.85**

(21) Anmeldenummer: **80100376.5**

(22) Anmeldetag: **25.01.80**

(51) Int. Cl.⁴: **G 06 K 9/56,** G 01 N 33/48

(54) Verfahren zum automatischen Markieren von Zellen und zur Bestimmung der Merkmale von Zellen aus zytologischen Abstrichpräparaten.

(30) Priorität: **01.02.79 DE 2903855**

(43) Veröffentlichungstag der Anmeldung:
**03.09.80 Patentblatt 80/18**

(45) Bekanntmachung des Hinweises auf die Patenterteilung:
**02.05.85 Patentblatt 85/18**

(84) Benannte Vertragsstaaten:
**DE FR GB IT SE**

(73) Patentinhaber: **Bloss, Werner H.,Prof. Dr.-Ing,
Lindenstrasse 45, D-7065 Winterbach (DE)**

(72) Erfinder: **Reinhardt, Erich, Dipl.-Ing.,
Burgherrenstrasse 91, D-7000 Stuttgart 30 (DE)**
Erfinder: **Erhardt, Rainer, Dipl.-Ing., Fellbacher
Strasse 45, D-7000 Stuttgart 60 (DE)**

(74) Vertreter: **Wilhelm, Hans-Herbert, Dr.-Ing. et al,
Gymnasiumstrasse 31B, D-7000 Stuttgart 1 (DE)**

(56) Entgegenhaltungen:
DE - A - 2 823 490
US - A - 3 824 393
US - A - 3 905 018

PATTERN RECOGNITION, Jahrgang 8, nr. 3, Juli 1976, Oxford, GB, G. CARAYANNOPOULOS et al.: "An algorithm for segmentation of metaphase spreads", Seiten 151-161
IEEE TRANSACTIONS ON COMPUTERS, Jahrgang C-20, Nr. 5, Mai 1971, New York, US, S. GRAY: "Local properties of binary images in two dimensions", Seiten 551-561
SYSTEMS. COMPUTERS CONTROLS, Jahrgang 4, Nr. 6, 1973, Washington, US, S. YOKOI et al.: "Topoiogical properties in digitized binary pictures", Seiten 32-40
COMPUTER, Jahrgang 7, Nr. 5, Mai 1974, Long Beach,

(56) Entgegenhaltungen: (Fortsetzung)
US, B. MAYALL: "Digital image processing at Lawrence Livermore Laboratory: Part II - Biomedical applications", Seiten 81-87
IEEE TRANSACTIONS ON ELECTRONIC COMPUTERS, Jahrgang EC-12, Nr. 12, Dezember 1963, New York, US, B. McCORMICK: "The illinois Pattern recognition computer - ILLIAC III", Seiten 791-813
IEEE TRANSACTIONS ON SYSTEMS, MAN AND CYBERNETICS, Jahrgang SMC-2. Nr. 4, September 1972, New York, US, J. BACUS et al.: "Leukocyte Pattern recognition", Seiten 513-526
PROCEEDINGS OF THE IEEE COMPUTER SOCIETY CONFERENCE ON PATTERN RECOGNITION AND IMAGE PROCESSING, 6-8 August 1979, Chicago, US, Y. LIN et al.: "A segmentation approach for pap smear inspection", Seiten 479-483

## Beschreibung

Die Erfindung betrifft ein Verfahren zum automatischen Markieren von Zellen und Bestimmung der Merkmale der Zellen aus zytologischen Abstrichpräparaten, die als mittels einer TV-Kamera an einem Mikroskop aufgenommene TV-Bilder abgebildet und nach einer A/D-Wandlung mit einer Digitalspeicherung, einer Zelldetektion, einer Grobeingrenzung, einer Segmentierung und einer Merkmalsmessung unterzogen werden.

Es ist ein Verfahren bekannt (US-A 3 824 393), das speziell für die Blutdifferentialbildanalyse und gegebenenfalls für die Analyse anderer ähnlich hohe Kontraste aufweisenden Zellen ausgelegt ist. Dieses Verfahren wird in Einzelschritte zerlegt, die eine A/D-Wandlung, eine Digitalspeicherung, eine Zelldetektion, eine Grobeingrenzung, eine Segmentierung und eine Merkmalsmessung enthalten. Die Zelldetektion erfolgt durch einen einfachen Schwellwert im Originalbild mit geringer Auflösung, so dass nur weisse Blutzellen mit hohem Kontrast detektiert werden können. Dabei ist auch Voraussetzung, dass jeweils nur eine derartige Zelle sich im Gesichtsfeld befindet. Eine Grobeingrenzung der Zellen erfolgt ebenfalls durch einen einfachen Schwellwertprozess mit einer Einrahmung des erfassten Gebietes. Auch zur Segmentierung dient ein einfacher Schwellwert, der nur bei Zellen mit hohem Kontrast (Weissen Blutzellen) erfolgreich sein kann. Die Merkmalsbestimmung der segmentierten Zellen wird dann durch Messung von Fläche, Umfang, Minimum und Maximum im Originalbild bei einem Schwellwert ausgeführt, wobei wiederum hohe Kontraste notwendig sind.

Es ist auch ein Verfahren zum automatischen Markieren von Zellen und Bestimmung der Merkmale der Zellen eines zytologischen Abstrichpräparates bekannt gewesen (DE-A 2 823 490), mit dem die Zellen auf Krebsverdächtigkeit untersucht werden. Bei diesem bekannten Verfahren werden gleichzeitig Bilder unterschiedlicher Auflösung von unterschiedlichen Abtastkameras benutzt, um einerseits bei einem Bild mit hoher Auflösung einen hohen Gehalt an Detailinformationen für einen bestimmten Teil der Zelle zu erhalten und um andererseits Messungen und Analysen anhand von Bildern mit geringer Auflösung durchzuführen. Es ist ein erheblicher apparativer Aufwand notwendig, der auch unterschiedliche Technologien erfordert. Für die Zellauffindung wird bei diesem bekannten Verfahren ein einfacher Schwellwert vorgesehen, der bei Routineanwendungen nicht sicher zum Erfolg führt. Auch die Segmentation basiert im wesentlichen auf Schwellwertprozessen. Zur Merkmalsbestimmung wird im wesentlichen eine Markov-Analyse angewandt, die sehr zeitaufwendig ist.

Der Erfindung liegt die Aufgabe zugrunde, ein Verfahren der eingangs genannten Art zu schaffen, das ein Erkennen von Zellen und eine Merkmalsextraktion durchführt, die sich besonders für eine numerische Klassifikation in einer Datenverarbeitungsmaschine eignet. Diese Aufgabe wird dadurch gelöst, dass

a) als grundlegender Schritt bei allen Prozessen Transformationen der digitalen Bilder mittels Nachbarschaftsbeziehungen auswertender lokal begrenzter Operatoren angewandt werden,

b) wobei in einem Zellmarkierer zur Zelldetektion die digitalen Original-Bilder mittels der lokal begrenzten Operatoren so transformiert werden, dass sie von unter einer vorgegebenen Grösse liegenden Strukturen gereinigt sind,

c) wonach die Lage der Zellkerne bestimmt wird, in dem in diesen transformierten Bildern lokale Grauwertmaxima detektiert werden, deren Abstand über einer vorgegebenen Grösse liegt,

d) wobei zur Detektion lokaler Grauwertmaxima in diesen transformierten Bildern nacheinander Schwellwertbilder erzeugt werden, die sich beim Durchlaufen von hohen zu niederen Schwellwerten ergeben, und in eine Logikschaltung des Zellmarkierers die Koordinaten der Bildpunkte ermittelt werden, die über dem jeweiligen Schwellwert liegen, wobei beim zeilenweisen Abtasten des ersten Schwellwertbildes die Koordinaten des ersten detektierten Punktes abgespeichert und mit einem ersten Rahmen vorgegebener Grösse umgeben werden, wobei weitere detektierte Bildpunkte desselben oder nachfolgender Schwellwertbilder nur dann abgespeichert und mit einem eigenen Rahmen umgeben werden, wenn sie ausserhalb der vorher festgelegten Rahmen liegen,

e) wonach mit Hilfe der Koordinaten der detektierten Rahmen die für die weitere Analyse interessanten Bildausschnitte der Originalbilder in einem Speicher festgelegt werden, die mit hoher Wahrscheinlichkeit Zellkerne enthalten,

f) wonach als Grenzfindungsprozess durch Prozessoren zunächst eine Grobeingrenzung der Kerngebiete in den detektierten Bildausschnitten durchgeführt wird, indem die Grauwerte der Bildausschnitte zunächst zeilen- und spaltenweise integriert und anschliessend aus den Minima der Histogramme der Funktionswerte der Zeilen- und Spaltenintegrationsfunktionen die Lage der Kerngebiete ermittelt werden, wonach zur Bestimmung der genauen Kerngrenzen in diesen grobeingegrenzten Kerngebieten eine Klassifikation durchgeführt wird, bei welcher sämtliche Bildpunkte mit einem Merkmalsvektor beschrieben und den zwei disjunkten Klassen Kernpunkte und Nicht-Kernpunkte zugeordnet werden, wobei die isolierten Zellkerne in einem Speicher festgelegt werden,

g) wonach durch Prozessoren zur Messung der Merkmale der eingegrenzten Zellkerne die Fläche, der Umfang und die Euler-Zahl an dem Originalbild und einem oder mehreren transformierten Bildern als Funktion des Grauwertes gemessen werden.

Die Erfindung schafft ein Verfahren für die automatische Erkennung von Zellen, für ihre Segmentierung und für die Bestimmung von Zellmerkmalen in zytologischen Präparaten, die in eine Serie von Digitalbildern umgewandelt werden. Die Verfahrensschritte sind für schnelle Parallelprozessoren optimiert und erlauben eine systematische Optimierung und eine einfache Anpassung an verschiedene Anwendungen bei der automatisierten Zytologie oder sogar an andere Anwendungen für eine Bildanalyse. Die Erfindung ist somit eine neue allgemeine Strategie für wichtige Verfahrensschritte der automatisierten Zytologie, wodurch sie sich von bekannten Verfahren unterscheidet, die nur eine spezielle Lösung für jeweils eine spezielle Anwendung bieten. Die Erfindung ermöglicht die Verarbeitung von zytologischen Präparaten, die aus den verschiedensten physiologischen Bereichen stammen (Blut, Gebärmutter, Blase, Luftwege, Magen usw.), in nur einem System, indem eine einfache Anpassung der Parameter vorgenommen wird.

Es hat sich gezeigt, dass für eine Klassifizierung der Zellen eine Kernanalyse ausreichend ist. Die Beschränkung auf die Kernanalyse führt zu Vorteilen, da nur die Zellkerne lokalisiert werden müssen, was die Zellerkennung vereinfacht. Auch die Zelldichte auf dem Präparat kann grösser sein, da sich die Plasmen überlagern können. Der zu untersuchende Präparatausschnitt wird bei gleicher Zellenanzahl kleiner, wobei sich keine Probleme mit überlappenden Plasmen ergeben. Die Verarbeitungszeiten für die Zellauffindung, die Grenzbestimmung und die Merkmalsermittlung, sind wesentlich kürzer. Bei der Zelldetektion wird das hochaufgelöste Bild so transformiert, dass kleine Partikel eliminiert werden, wonach die Detektion im transformierten Bild durch die Markierung relativer Grauwertmaxima erfolgt. Es ergibt sich eine hohe Verarbeitungsgeschwindigkeit auch im hochaufgelösten Bild, ohne dass ein zusätzlicher Detektor erforderlich ist. Zur Segmentierung wird eine Klassifikation jedes Bildpunktes mit vielen Merkmalen in Punkte aus dem Kerngebiet und andere Punkte durchgeführt. Dadurch wird das Verfahren weitgehend unabhängig von Kontrasten und Färbungsvarianzen. Durch die Messung der Minkowski-Masse werden Texturmerkmale erhalten, die weitgehend färbungs- und kontrastunabhängig sind. Ein besonderer Vorteil besteht auch darin, dass das für die schnelle Prozessorverarbeitung optimierte Verfahren eine Anpassung an verschiedene Anwendungen der automatisierten Zytologie ermöglicht, indem eine einfache Anpassung von Parametern vorgenommen wird.

Zum Reinigen der TV-Bilder sind lokale Operatoren für Dilatation an den Bildern und den invertierten Bildern vorgesehen. Damit werden zweidimensionale Filteroperationen durchgeführt, die ohne Vorgabe eines Schwellwertes Störstrukturen und kleinere Kerne (z.B. von Lymphozyten usw.) von vornherein unterdrücken. Ausserdem werden Kerne, die sich berühren, vor der Zellkernfindung wieder in zwei getrennte Bereiche aufgespalten.

Zum Lokalisieren der Zellkerne werden Schwellwertprozesse zur Bestimmung relativer Grauwertmaxima durchgeführt. Dadurch erfolgt eine Markierung der Zellkerne im gefilterten Bild durch eine Maximumsdetektion mit Nachbarschaftsanalyse und Informationsunterdrückung unter einem vorgegebenen Schwellwert. Auf diese Weise führen Kernstrukturen innerhalb eines Kerns nur zu einer einzigen und Plasmabereiche zu keiner Markierung.

Als Grenzfindungsprozess wird zunächst eine Grobeingrenzung der Kerngebiete mittels einer zeilen- und spaltenweisen Integration der Grauwerte der Bilder durchgeführt. In diesen grobeingegrenzten Gebieten wird zur Bestimmung der Kerngrenzen eine Klassifikation durchgeführt, bei welcher sämtliche Punkte der Bilder zwei disjunkten Klassen zugeordnet werden. Aus den Grauwertintegralfunktionen, die durch zeilen- oder spaltenweise Integration der Bilder entstehen, werden zur Grobeingrenzung zunächst die Histogramme der Funktionswerte der Grauwertintegralfunktionen gebildet. In diesen Histogrammen sind die Bildkomponenten Kern, Plasma und Untergrund durch relative Minima voneinander getrennt.

Überträgt man dann die zu den relativen Minima im Histogramm gehörenden Grauwerte wieder in die Grauwert-Integral-Funktionen, so erhält man daraus eine grobe Ortsbestimmung für die drei relevanten Bildkomponenten, die dann durch gerade Linien voneinander getrennt werden können.

Die weitere Verarbeitung beschränkt sich dann auf den so grob eingeschränkten Kernbereich, den man, um sicher zu gehen, dass die gesamte Kerninformation darin enthalten ist, in jeder Integrationsrichtung um einige Bildpunkte vergrössert. Schon durch die Grobeinsetzung lässt sich wieder eine Datenreduktion durchführen, durch die Strukturen eliminiert werden, die mit Sicherheit keine Zellkerne sind. An dieser Stufe kann eventuell auch das Verhältnis von Kerngrössen zur Plasmagrösse eingeführt werden, das für die zu untersuchenden Zellen normalerweise bekannt ist, um weiter Ereignisse zu eliminieren, die keine Zellen sind. Die exakte Markierung von Kernen erfolgt dann durch die Klassifikation. Für die Kerngrenzbestimmung wurde ein Klassifikationsverfahren angewandt, bei dem das Bild zeilenweise abgearbeitet werden kann. Bei der durchgeführten Klassifizierung wird versucht, sämtliche Punkte des Bildes nacheinander zwei disjunkten Klassen zuzuordnen, nämlich

1) $\Omega_1$: Menge aller Kerngrenzpunkte.
2) $\Omega_2$ Menge aller Punkte, die nicht Grenzpunkte sind.

Dabei wird $\Omega_1$ noch einmal in vier paarweise disjunkte Untermengen zerlegt, wobei linke und rechte, sowie obere und untere Randpunkte verschiedenen Untermengen zugeordnet werden.

Im Hinblick auf eine sichere Klassifizierung wird jeder Bildpunkt hinreichend durch einen achtdimensionalen Merkmalsvektor beschrieben. Die für den Klassifikationsprozess relevanten Merkmale sind die erste und zweite partielle Ableitung des Grauwertes in x- und y-Richtung, die Differenz des gemittelten rechtsseitigen und linksseitigen, sowie oberen und unteren Grauwertes, die Wahrscheinlichkeit, einen Kerngrenzpunkt am Ort des aktuellen Bildpunktes anzutreffen und die Wahrscheinlichkeit, einen Kerngrenzpunkt am Ort des aktuellen Bildpunktes anzutreffen und die Wahrscheinlichkeit einen Kernpunkt mit dem Grauwert des aktuellen Bildpunktes anzutreffen. Aus diesen Merkmalen wird für jeden Bildpunkt ein Mass für die Wahrscheinlichkeit für die Zugehörigkeit zu einer ganz bestimmten Klasse zugewonnen.

Um die Gradientenmerkmale zuverlässig ermitteln zu können, wird das Bild vor der Merkmalsbestimmung einer Medianfilterung unterworfen. Das Verfahren benötigt vorteilhaft zu Beginn einen Bildpunkt innerhalb des Zellkerns, der bei der Zellauffindung und Markierung ohnehin vorliegen muss.

Für die Merkmalsextraktion ist es in weiterer Ausgestaltung der Erfindung vorteilhaft, wenn vor dem Bestimmen der Merkmale der Zellkerne der Grauwertbereich gemessen und festgelegt wird, in welchem die Information moduliert ist. Dies kann beispielsweise über den Verlauf der Umfangsfunktion für den gesamten Grauwertbereich erfolgen.

In weiterer Ausgestaltung werden innerhalb des vorgegebenen Grauwertbereiches die Fläche, der Umfang und die Euler-Zahl an dem Originalbild und den transformierten Bildern und/oder an den logischen oder arithmetischen Verknüpfungen der transformierten Bildern gemessen. Die damit gemessenen Merkmalsvektoren setzen sich aus drei linear unabhängigen Minkowski-Massen – Fläche, Umfang und Euler-Zahl – sowie deren nichtlinearen Kombinationen zusammen.

Weitere Merkmale und Vorteile der Erfindung ergeben sich aus der nachfolgenden Beschreibung eines Verfahrens, das in der in einem Blockschaltbild dargestellten Vorrichtung durchgeführt wird, und einem Beispiel einer Merkmalsbeschreibung.

Durch das Mikroskop-Objektiv 1 wird ein Gesichtsfeld des Präparats auf die photoempfindliche Schicht der TV-Kamera 1 abgebildet und dort zeilenweise abgetastet. Die Signale werden so abgetastet und in digitale Stufen gewandelt, dass das Feld in 288 × 512 Bildpunkte mit je 256 Graustufen zerlegt wird. Der Bildpunktabstand beträgt 0,5 um. Die verwendete TV-Messkamera zeichnet sich durch sehr kleine Geometriefehler, eine lineare Übertragungskennlinie, ein grosses Signal/ Rauschverhältnis und gute Stabilität aus. Die Signalinhomogenitäten durch ungleichmässige Empfindlichkeiten auf der photoempfindlichen Schicht und die Mikroskopbeleuchtung werden on-line mit einem digitalen Shading-Korrektor 3 kompensiert. Die kompensierten Bilddaten werden direkt in einen digitalen Bildspeicher 4 (288 × 512) Bildpunkte à 8 bit zur weiteren Analyse abgespeichert.

Im Zellmarkierer 5 führt ein Arrayprozessor zunächst eine Bildtransformation (Erosion mit Radius $r_o$, $r_o$ = Radius der grössten zu unterdrückenden Strukturen) durch 2-dimensionale örtlich begrenzte Koppelfelder durch. Das transformierte Bild wird wieder abgespeichert. In einem zweiten Schritt erfolgt im transformierten Bild die Detektion relativer Grauwertmaxima in Unterfeldern vorgegebener Grösse. Hierfür werden aus dem transformierten Bild nacheinander Schwellwertbilder erzeugt, die sich beim Durchlaufen der Schwellwerte von hohen zu niederen Grauwerten ergeben. In einer Logikschaltung werden die Koordinaten der Bildpunkte ermittelt, die über dem jeweiligen Schwellwert liegen. Beim zeilenweisen Abtasten des ersten Schwellwertbildes werden die Koordinaten des ersten detektierten Punktes abgespeichert und mit einem Rahmen vorgegebener Grösse umgeben. Die weiteren detektierten Punkte werden nur dann abgespeichert, wenn sie ausserhalb des vorgegebenen Rahmens liegen. Alle abgespeicherten Markierungen werden mit einem solchen Rahmen umgeben. Bei der Auswertung der nachfolgenden Schwellwertbilder werden wiederum nur dann neue Markierungen abgespeichert, wenn diese nicht innerhalb bereits gefundener Rahmen liegen. Das letzte auszuwertende Schwellwertbild wird durch einen Schwellwert erzeugt, der dem mittleren Grauwert der Zytoplasmen entspricht.

Die Markierungen liegen mit hoher Wahrscheinlichkeit innerhalb von Zellkernen. Ihre Koordinaten sind immer mehr als die halbe Kantenlänge des vorgegebenen Rahmens voneinander entfernt. Sie markieren die interessanten Ereignisse im abgespeicherten Originalbild. Im weiteren ist aus diesem Bild nur die Information zu verarbeiten, die innerhalb der gefundenen Rahmen liegt. Dazu werden die so definierten Bildfelder in digitalen Ereignisspeichern 6 abgelegt.

Danach erfolgt die zweistufige Segmentierung jedes Zellbildes aus den Ereignisspeichern 6. Die Verarbeitung wird mit dem beschriebenen Verfahren durch schnelle Mikroprozessoren 7 durchgeführt. Zunächst werden die Grobeingrenzungen der Zellkerne und Zytoplasmen ermittelt und damit die auszuwertenden Bildfelder verkleinert. In diesen verkleinerten Bildfeldern kann die genaue Grenze des Zellkerns und der Zytoplasmen durch Mikroprogramme berechnet werden. Die isolierten Zellkerne werden über den nachfolgenden Ereignisspeicher 8 sequentiell der Merkmalsermittlung zugeführt.

Die verschiedenen Bildtransformationen zur Merkmalsermittlung lassen sich sehr schnell parallel durch spezielle Arrayprozessoren 9 durchführen. Sowohl das Originalkernbild als auch die transformierten Kernbilder und deren arithmetische Verknüpfungen werden in digitalen Speichern abgelegt. Die Information der n abgelegten Kernbilder wird über einen Schwellwertprozess mit einstellbarer Schwelle einer Messlogik zugeführt, die die Merkmale «Fläche», «Umfang» und «Euler-Zahl» durch logische Verknüpfungen und Zähloperationen im Schwellwertbild misst. Es werden m Schwellen in dem für jeden Kern zuvor berechneten Grauwertbereich nacheinander durch den Steuerprozessor 10 gesetzt. Man erhält so die 3 Merkmale eines Zellkerns für die gesetzten m diskreten Grauwerte (Schwellwerte) und damit $3 \cdot n$ m-Merkmale. Durch nichtlineare Verknüpfungen von Merkmalsfunktionen kann die Merkmalsanzahl weiter erhöht werden. Die Gesamtheit der Merkmale eines Zellkerns bildet dessen Merkmalsvektor, der dem Klassifikationsprozessor 11 für die Einzelereignisse zugeführt wird.

Danach erfolgen die Segmentierung, Kerngrenzberechnung, Transformationen und Merkmalsberechnung des nächsten markierten Ereignisses. Sind alle markierten Ereignisse eines Gesichtsfeldes abgearbeitet, so transportiert ein Schrittmotor das Präparat um ein Gesichtsfeld weiter. Die Kamera 2 wird durch schnelles Löschen der abklingenden Information des vorhergehenden Bildfeldes zur Aufnahme des neuen Bildfeldes vorbereitet. Durch stroboskopische Beleuchtung des Präparats kann nach 120 ms die Information des neuen Bildfeldes abgespeichert werden. Durch die systematisch aufgebauten und prozessororientierten Algorithmen zur Markierung und Segmentierung von Zellen im Gesichtsfeld, sowie zur Merkmalserfassung aus den segmentierten Zellkernen und ihrer Klassifizierung erfolgt die Analyse der Gesichtsfelder mit speziellen Parallelprozessoren unter Verwendung modernster Halbleitertechnologien in einer Zeit von 120 ms schritthaltend (on-line). Dabei können bis zu acht Ereignisse pro Gesichtsfeld erfasst werden. Der gesamte Verarbeitungsablauf wird durch einen Steuerungsprozessor synchronisiert.

Eine Möglichkeit zur Berechnung der Merkmale soll im folgenden am Beispiel der Merkmalsermittlung eines bereits segmentierten und eingegrenzten Zellkerns veranschaulicht werden.

Zunächst wird der Umfang des untransformierten Kernbildes für jeden der 256 Grauwerte ermittelt. Man erhält so den Umfang in Abhängigkeit von diskreten 256 Grauwerten (Umfangsfunktion). Aus dieser Umfangsfunktion wird der relevante Grauwertbereich für die weiteren Messungen so festgelegt, dass sie innerhalb dieses Bereichs nicht konstant ist. In diesem Bereich ist also die Grautoninformation des Zellkerns moduliert. Der so ermittelte Grauwertbereich wird in 20 äquidistante Intervalle unterteilt, die als Schwellwerte zur Messung der Merkmale aus dem Kernbild verwendet werden. Nun wird das Kernbild z.B. folgenden Bildtransformationen unterworfen:

| Erosion mit Radius | $r = 1$ |
| Erosion mit Radius | $r = 2$ |
| Dilatation mit Radius | $r = 1$ |
| Dilatation mit Radius | $r = 2$ |
| (Dilatation mit Radius | $r = 1$) − (Erosion mit Radius $r = 1$) |
| (Dilatation mit Radius | $r = 3$) − (Erosion mit Radius $r = 3$) |

Man erhält so das Originalbild und 6 unterschiedlich transformierte Bilder. In diesen Bildern werden nun folgende drei Basismerkmale zu jedem der 20 vorher bestimmten Grauwerte ermittelt:
– «Fläche»
– «Umfang»
– «Konnexität»

Ausserdem werden folgende Kombinationen dieser Basismerkmale zu jedem der 20 Grauwerte berechnet.
– «Quotient aus der Konnexität (+) und der Fläche» (Konnexität (+) ist der positive Anteil der Konnexität)
– «Quotient aus der Konnexität (−) und der Fläche» (Konnexität (−) ist der negative Anteil der Konnexität)
– «Quotient aus dem Quadrat des Umfangs und der Fläche»

Man erhält so 6 verschiedene Merkmalsfunktionen mit je 20 Werten. Dabei wird nicht jede Merkmalsfunktion in jedem transformierten Bild ermittelt, sondern so ausgewählt, wie in Tabelle 1 dargestellt. Diese Auswahl der Merkmalsfunktionen ergibt sich z.B. durch eine Analyse des Merkmalsraums und durch Klassifikationsexperimente mit einer repräsentativen Anzahl von Zellen. Die Merkmalsfunktionen werden so ausgewählt, dass sie möglichst viel Information zur Unterscheidung verschiedener Zellklassen voneinander aus den Bildern extrahieren.

Man erhält damit einen Satz von $18 \times 20 = 360$ Merkmalen, die durch 360 Zahlen beschrieben werden. Der auf diese Weise gewonnene Merkmalsatz jeder Zelle wird noch normiert. Es stellt die datenreduzierte Beschreibung der Zelle dar, die für eine automatische Klassifikation geeignet ist.

Tabelle 1 Beispiel der Merkmalsberechnung eines Zellkerns

| Merkmalsfunktion (je 20 diskrete Werte) | Bild in dem gemessen wird |
| --- | --- |
| 1 Fläche | Originalbild |
| 2 Umfang | Originalbild |
| 3 Konnexität (+) Fläche | Originalbild |
| 4 Konnexität (−) Fläche | Originalbild |
| 5 Umfang | Erosion mit Radius $r = 1$ |
| 6 Konnexität | Erosion mit Radius $r = 1$ |
| 7 (Umfang)²/Fläche | Erosion mit Radius $r = 1$ |

Tabelle 1 Beispiel der Merkmalsberechnung eines Zellkerns (Fortsetzung)

| Merkmalsfunktion (je 20 diskrete Werte) | | Bild in dem gemessen wird |
|---|---|---|
| 8 | Umfang | Erosion mit Radius r = 2 |
| 9 | Konnexität | Erosion mit Radius r = 2 |
| 10 | (Umfang)²/Fläche | Erosion mit Radius r = 2 |
| 11 | Umfang | Dilatation mit Radius r = 1 |
| 12 | Konnexität | Dilatation mit Radius r = 1 |
| 13 | Umfang | Dilatation mit Radius r = 2 |
| 14 | Konnexität | Dilatation mit Radius r = 2 |
| 15 | Umfang | (Dilatation mit r = 1) − (Erosion mit r = 1) |
| 16 | Konnexität | (Dilatation mit r = 1) − (Erosion mit r = 1) |
| 17 | Umfang | (Dilatation mit r = 3) − (Erosion mit r = 3) |
| 18 | Konnexität | (Dilatation mit r = 3) − (Erosion mit r = 3) |

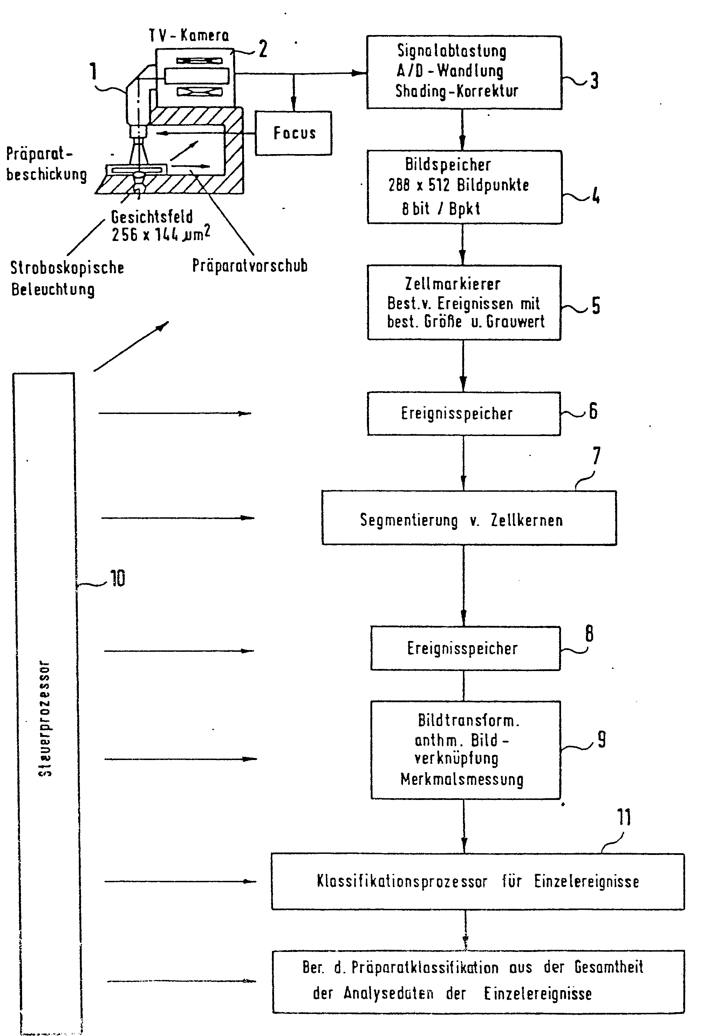

## Patentansprüche

1. Verfahren zum automatischen Markieren von Zellen und Bestimmung der Merkmale der Zellen aus zytologischen Abstrichpräparaten, die als mittels einer TV-Kamera (2) an einem Mikroskop (1) aufgenommene TV-Bilder abgebildet und nach einer A/D-Wandlung (3) mit einer Digitalspeicherung (4), einer Zelldetektion, einer Grobeingrenzung, einer Segmentierung und einer Merkmalsmessung unterzogen werden, dadurch gekennzeichnet, dass

a) als grundlegender Schritt bei allen Prozessen Transformationen der digitalen Bilder mittels Nachbarschaftsbeziehungen auswertender lokal begrenzter Operatoren angewandt werden,

b) wobei in einem Zellmarkierer (5) zur Zelldetektion die digitalen Original-Bilder (in 4) mittels der lokal begrenzten Operatoren so transformiert werden, dass sie von unter einer vorgegebenen Grösse liegenden Strukturen gereinigt sind,

c) wonach die Lage der Zellkerne bestimmt wird, in dem in diesen transformierten Bildern lokale Grauwertmaxima detektiert werden, deren Abstand über einer vorgegebenen Grösse liegt,

d) wobei zur Detektion lokaler Grauwertmaxima in diesen transformierten Bildern nacheinander Schwellwertbilder erzeugt werden, die sich beim Durchlaufen von hohen zu niederen Schwellwerten ergeben, und in einer Logikschaltung des Zellmarkierers die Koordinaten der Bildpunkte ermittelt werden, die über dem jeweiligen Schwellwert liegen, wobei beim zeilenweisen Abtasten des ersten Schwellwertbildes die Koordinaten des ersten detektierten Punktes abgespeichert und mit einem ersten Rahmen vorgegebener Grösse umgeben werden, wobei weitere detektierte Bildpunkte desselben oder nachfolgender Schwellwertbilder nur dann abgespeichert und mit einem eigenen Rahmen umgeben werden, wenn sie ausserhalb der vorher festgelegten Rahmen liegen,

e) wonach mit Hilfe der Koordinaten der detektierten Rahmen die für die weitere Analyse interessanten Bildausschnitte des Originalbildes in einem Speicher festgelegt werden, die mit hoher Wahrscheinlichkeit Zellkerne enthalten,

f) wonach als Grenzfindungsprozess durch Prozessoren (7) zunächst eine Grobeingrenzung der Kerngebiete in den detektierten Bildausschnitten durchgeführt wird, indem die Grauwerte der Bildausschnitte zunächst zeilen- und spaltenweise integriert und anschliessend aus den Minima der Histogramme der Funktionswerte der Zeilen- und Spaltenintegrationsfunktionen die Lage der Kerngebiete ermittelt werden, wonach zur Bestimmung der genauen Kerngrenzen in diesen grobeingegrenzten Kerngebieten eine Klassifikation durchgeführt wird, bei welcher sämtliche Bildpunkte mit einem Merkmalsvektor beschrieben und den zwei disjunkten Klassen Kernpunkte und Nicht-Kernpunkte zugeordnet werden, wobei die isolierten Zellkerne in einem Speicher festgelegt werden,

g) wonach durch Prozessoren (9) zur Messung der Merkmale der eingegrenzten Zellkerne die Fläche, der Umfang und die Euler-Zahl an dem Originalbild und einem oder mehreren transformierten Bildern als Funktion des Grauwertes gemessen werden.

2. Verfahren nach Anspruch 1, dadurch gekennzeichnet, dass die Fläche, der Umfang und die Euler-Zahl der Zellkerne an dem Originalbild und logischen oder arithmetischen Verknüpfungen der transformierten Bilder gemessen werden.

3. Verfahren nach Anspruch 1 oder 2, dadurch gekennzeichnet, dass vor dem Messen der Merkmale der Zellkerne der Grauwertbereich gemessen und festgelegt wird, in welchem die Information moduliert ist, und dass nur in diesem Grauwertbereich die Merkmalsmessung erfolgt.

4. Verfahren nach Anspruch 1, dadurch gekennzeichnet, dass die Grobeingrenzung der Zellplasmen aus den Minima der Histogramme der Funktionswerte der Zeilen- und Spaltenintegrationsfunktionen bestimmt werden.

## Claims

1. Method for the automatic marking of cells and for feature determination of cells from cytological smears, which are depicted as TV pictures photographed by means of a TV camera (2) on a micro-

scope (1) and, after A/D conversion (3) with a digital memory (4), are subjected to cell detection, rough localisation, segmentation and feature measurement, characterised in that

a) transformations of digital images by proximity relationships of evaluating locally limited operators are employed as a basic step in all processes;

b) in a cell marker (5) for cell detection, the original digital images (in 4) are so transformed by means of the locally limited operators that they are cleansed of structures which are below a given magnitude;

c) location of the cell nuclei is determined in that in these transformed images, local grey value maxima are detected, the spacing-apart of which is above a predetermined magnitude;

d) whereby threshold value images are generated one after another for detecting local grey value maxima in these transformed images and which arise during progress from high to lower threshold values, the co-ordinates of those image points which lie above the relevant threshold value being ascertained in a logic circuit of the cell marker, whereby, as the first threshold value image is scanned line by line, the co-ordinates of the first detected point are stored and enclosed by a first frame of given size, further detected image points of the same or successive threshold value images only being stored and enclosed in a frame of their own if they lie outside the previously established frame;

e) whereby by means of the co-ordinates of the detected frames those portions of the original images which in all probability contain cell nuclei and which may be of interest for further analysis can be established;

f) as a boundary finding process, processor (7) first carries out a rough localisation of the nuclear areas in the portions of image detected in that the grey values of the image portions are first integrated linewise and columnwise and the location of the nuclear areas are ascertained from the minima of the histograms of the function values of the line and column integration functions, after which in order to determine the exact nuclear limits in these roughly localised nuclear areas a classification is carried out in which all image points are described with a feature vector and are associated with the two disjointed classes–nuclear points and non-nuclear points, the isolated cell nuclei being established in a memory;

g) for measuring the features of the localised cell nuclei, processor (9) measures the area, the circumference and the Euler number on the original picture and one or more transformed pictures as a function of the grey value.

2. Method according to Claim 1, characterised in that the area, the circumference and the Euler number of the cell nuclei on the original picture and logical or arithmetic links in the transformed pictures are measured.

3. Method according to Claim 1 or 2, characterised in that before measuring the features of the cell nuclei, the grey value range is measured and established in which the information is modulated and in that feature measurement occurs only in this grey value range.

4. Method according to Claim 1, characterised in that the rough localisation of cell plasma is determined from the minima of the histograms of the function values of line and column integration functions.

**Revendications**

1. Procédé pour le marquage automatique de cellules et la détermination des caractéristiques de cellules de frottis cytologiques qui sont reproduites sous la forme d'images TV prises au moyen d'une caméra de TV (2) sur un microscope (1) et qui seront soumises, après une conversion A/D (analogique numérique) (3) avec mise en mémoire numérique (4), à une détection des cellules, à une localisation grossière, à une segmentation et à une mesure des caractéristiques, procédé caractérisé en ce que,

a) comme étape fondamentale, on utilise, dans tous les procédés, des transformations des images numériques au moyen d'opérateurs localement limités exploitant des liaisons de voisinage,

b) alors que, dans un marquage de cellules (5), les images numériques originales (dans 4) sont transformées pour la détection des cellules, au moyen des opérateurs localement limités, de telle façon qu'elles sont épurées des structures qui se situent en dessous d'une grosseur prescrite,

c) après quoi, on détermine la position des noyaux cellulaires, en détectant, dans ces images transformées, des valeurs maxima de gris locales dont l'écart se situe au-dessus d'une grandeur prescrite,

d) pendant que, pour la détection de maxima des valeurs locales de gris, on produit successivement, dans ces images transformées, des images de valeur de seuil qui apparaissent lors du passage continu de valeurs de seuil élevées vers de plus basses, et, un montage logique du marqueur de cellules détermine les coordonnées des points d'image qui se situent au-dessus de la valeur de seuil concernée, alors que, au cours du balayage ligne par ligne de la première image à valeur de seuil les coordonnées du premier point détecté sont mises en mémoire et sont entourées d'un premier cadre d'une grandeur prescrite, pendant que les autres points d'image détectés de la même image de valeur de seuil ou de la suivante ne sont mis en mémoire et ne sont entourés d'un cadre qui leur soit propre que si ils se trouvent en dehors du cadre précédemment posé,

e) après quoi, on localise, à l'aide des coordonnées des cadres détectés, les sections de l'image originale intéressantes pour le reste de l'analyse dans une mémoire, ces images contenant, avec une grande probabilité des noyaux cellulaires,

f) puis, on effectue, comme opération destinée à trouver les limites au moyen de calculateurs (7), d'abord, une délimitation grossière des zones des noyaux dans les sections détectées de l'image, en intégrant les valeurs de gris des sections d'image, d'abord, en lignes et en colonnes, et en déterminant ensuite la position des zones des noyaux à partir des minima de l'histogramme des valeurs fonctionnelles des fonctions d'intégration de ces lignes et de ces colonnes, après quoi on se livre, pour déterminer les limites précises des noyaux dans ces domaines grossièrement délimités, à une classification dans laquelle tous les points de l'image sont décrits au moyen d'un vecteur de caractéristiques et attribués à deux classes disjointes, avec noyaux, et sans noyaux; les noyaux de cellules isolés étant fixés dans une mémoire,

g) après quoi, pour la mesure des caractéristiques des noyaux de cellules délimités, on mesure, au moyen du calculateur (9), en fonction des valeurs de gris, la surface, la circonférence, et le nombre d'Euler des noyaux des cellules sur l'image originale et sur une ou plusieurs images transformées.

2. Procédé suivant la revendication 1, caractérisé en ce que la surface, la circonférence et le nombre d'Euler des noyaux des cellules sont mesurés sur l'image originale et sur des fonctions logiques ou arithmétiques des images transformées.

3. Procédé suivant l'une des revendications 1 ou 2, caractérisé en ce qu'avant de mesurer les caractéristiques des noyaux des cellules, on mesure le domaine des valeurs de gris et le fixe, tout en modulant l'information, et que la mesure des caractéristiques est effectuée seulement dans ce domaine des valeurs de gris.

4. Procédé suivant la revendication 1, caractérisé en ce que la délimitation grossière des cytoplasmes est déterminée d'après les minima de l'histogramme des valeurs fonctionnelles des fonctions d'intégrations en lignes et en colonnes.

TV-Kamera 2

1

Präparat-beschickung

Focus

Gesichtsfeld
256 x 144 μm²

Stroboskopische
Beleuchtung

Präparatvorschub

Signalabtastung
A/D-Wandlung
Shading-Korrektur — 3

Bildspeicher
288 x 512 Bildpunkte
8 bit / Bpkt — 4

Zellmarkierer
Best. v. Ereignissen mit
best. Größe u. Grauwert — 5

Ereignisspeicher — 6

Segmentierung v. Zellkernen — 7

Steuerprozessor — 10

Ereignisspeicher — 8

Bildtransform.
anthm. Bildverknüpfung
Merkmalsmessung — 9

Klassifikationsprozessor für Einzelereignisse — 11

Ber. d. Präparatklassifikation aus der Gesamtheit
der Analysedaten der Einzelereignisse